# EUROPÄISCHE PATENTANMELDUNG

(11) **EP 0 638 617 A1**
(43) Veröffentlichungstag der Anmeldung: **15.02.1995**
(21) Anmeldenummer: 94810458.3
(22) Anmeldetag: 04.08.1994
(51) Int. Cl.: C09B 69/02, C08K 5/34

(54) **Pigmentsalze**

(30) Priorität: 13.08.1993 CH 2412/93
(71) Anmelder: CIBA-GEIGY AG, CH-4002 Basel (CH)
(72) Erfinder: Chassot, Laurent, Dr., CH-1724 Praroman (CH)

(57) **Zusammenfassung**

Pigmentsalze von Verbindungen der Formel

E-F-(G)ₙ (I),

worin
F den Rest eines Pigments der Monoazo-, Bisazo-, Anthrachinon-, Perinon-, Diketopyrrolopyrrol- oder Isoindolinreihe bedeutet,
E ein Säurerest -COOH, -SO₃H oder 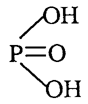
ist,
n 1 oder, wenn E 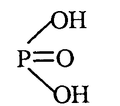
bedeutet, 1 oder 2 ist,
G einen Nitroxylrest der Formel

-X₁-V-X₂-T-A

bedeutet, worin A eine Gruppe der Formel 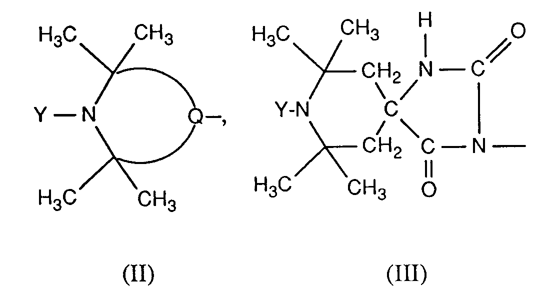
oder 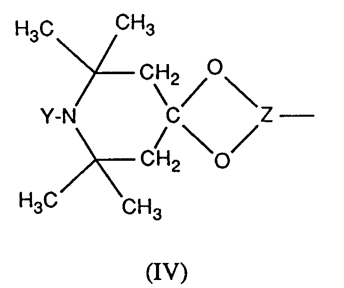
bedeutet, worin Y O·, OH oder OR₃ ist und R₃ C₄-C₁₀-Alkyl oder C₅-C₆-Cycloalkyl ist.

Für die Bedeutung von X₁, X₂ V, T, Q und Z wird auf Anspruch 1 verwiesen.

Diese Pigmentsalze eignen sich zum Pigmentieren von hochmolekularem organischem Material mit ausgezeichneter Licht- und Wetterbeständigkeit.

## Beschreibung

Die vorliegende Erfindung betrifft Pigmente mit sauren Gruppen und Nitroxylgruppen, die polymere intermolekulare Salze bilden, welche hervorragende Pigmenteigenschaften, insbesondere sehr hohe Licht- und Wetterbeständigkeit besitzen.

Aus der GB-A 2 252 976 sind intermolekulare Salze von zwitterionischen Farbstoffen, d.h. von Farbstoffen mit Säureresten und eine sterisch gehinderte Aminogruppe enthaltenden Resten, bekannt, die sich als Pigmente zum Färben von Kunststoffmassen eignen. Je nach Anwendung genügen diese Salze aber nicht immer den heutigen Anforderungen der
Technik.

Gemäss vorliegender Erfindung sind nun Pigmente enthaltend Säuregruppen und basische sterisch gehinderte Nitroxylgruppen gefunden worden, welche intermolekulare Salze bilden und überraschend bessere Pigmenteigenschaften, insbesondere Licht- und Wetterbeständigkeit zeigen.

Die vorliegende Erfindung betrifft demnach Pigmentsalze von Verbindungen der Formel

E-F-(G)ₙ (I),

worin
F den Rest eines Pigments der Monoazo-, Bisazo-, Anthrachinon-, Perinon-, Diketopyrrolopyrrol- oder Isoindolinreihe bedeutet, E ein Säurerest -COOH, -SO₃H oder 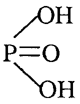
ist,
n 1 oder, wenn E 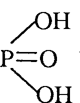
bedeutet, 1 oder 2 ist,
G einen Nitroxylrest der Formel

-X₁-V-X₂-T-A

bedeutet, worin
X₁ und X₂ unabhängig voneinander -O-, -S-, -N(R₁)-, -CO- oder -SO₂- oder eine direkte Bindung,
V ein Gruppe (CH₂)ₘ₋, 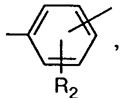
-(CH₂CH₂O)ₘ-CH₂CH₂- oder eine direkte Bindung und m 1 oder 2 bedeuten, wobei, wenn V eine direkte Bindung ist, X₁ ebenfalls eine direkte Bindung oder -CO- und X₂ eine direkte Bindung, -O- oder -N(R₁)- bedeuten, T eine Gruppe 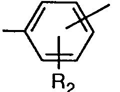
oder -(CH₂)ₘ- ist und, wenn nicht an einem N-Atom gebunden, auch eine direkte Bindung sein kann,
R₁ Wasserstoff oder C₁-C₄-Alkyl und
R₂ Waserstoff, Halogen oder C₁-C₄-Alkyl bedeuten,
A eine Gruppe der Formel 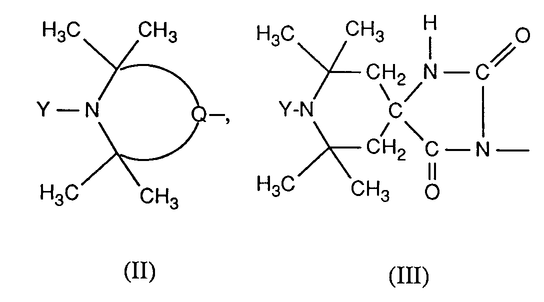
oder 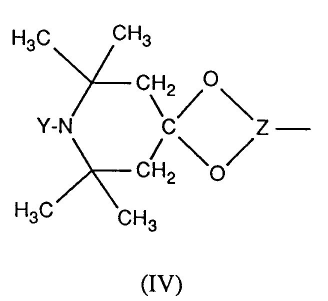
ist, worin
Y O·, OH oder OR₃ ist und R₃ C₄-C₁₀-Alkyl oder C₅-C₆-Cycloalkyl bedeutet,
Q eine Gruppe der Formel 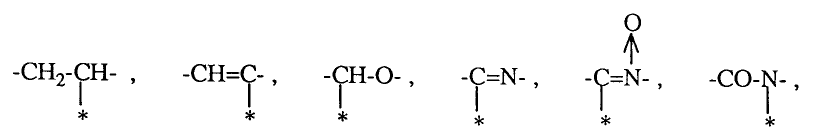 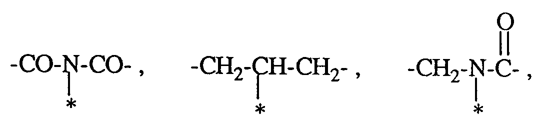 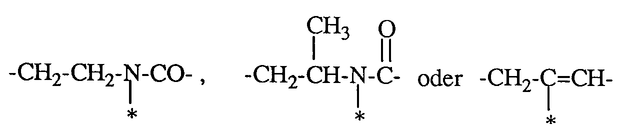
darstellt, worin die mit * bezeichnete Bindung die zu T führende Bindung bedeutet, und
Z eine Gruppe der Formel 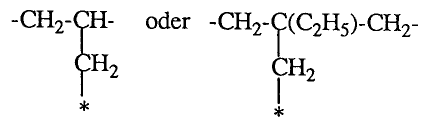
ist, worin die mit * bezeichnete Bindung die zu T führende Bindung darstellt.

Bedeuten etwaige Substituenten C₁-C₄-Alkyl, so handelt es sich um Methyl, Ethyl, n-Propyl, Isopropyl, n-Butyl, sec.-Butyl oder tert.-Butyl.

R₃ bedeutet als C₄-C₁₀-Alkyl, z.B. tert.-Butyl, n-Amyl, n-Hexyl, n-Octyl oder n-Decyl.

Als C₅-C₆-Cyclohexyl bedeutet R₃ z.B. Cyclopentyl oder Cyclohexyl.

Y ist vorzugsweise OH oder OR₃, worin R₃ n-Octyl oder Cyclohexyl bedeutet.

Es ist anzunehmen, dass die Pigmente als Polymerkörper vorliegen, also der Formel 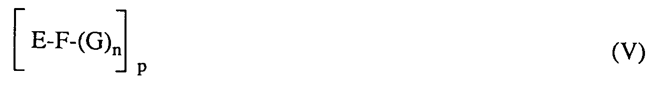
entsprechen, wobei der Polymerisationsgrad p von 2 bis 30 variieren kann.

Bevorzugt sind Pigmentsalze von Verbindungen der Formel I worin E -SO₃H bedeutet.

Von besonderem Interesse sind Pigmentsalze von Verbindungen der Formel I, worin G einen Nitroxylrest der Formel

X₁-X₂-T-A

bedeutet, worin
X1-CO- oder eine direkte Bindung bedeutet,
X₂ -O- oder -N(R₁)- ist,
T eine Gruppe 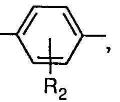
-(CH₂)ₘ- oder eine direkte Bindung bedeutet,
R₁ und R₂ Wasserstoff oder Methyl sind,
A eine Gruppe 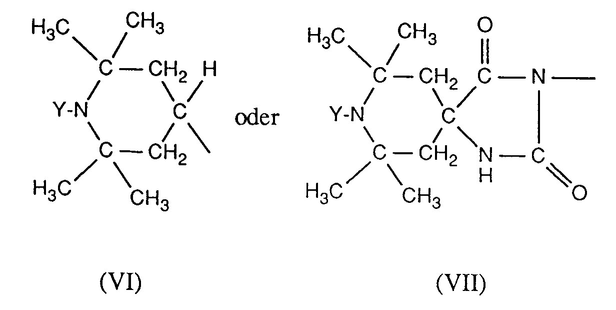
bedeutet, worin
Y OH oder OR₃ ist und R₃ n-Octyl oder Cyclohexyl bedeutet.

Bevorzugt werden Pigmentsalze von Verbindungen der Formel 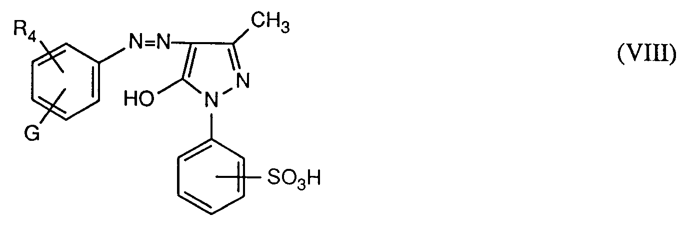
oder der Formel 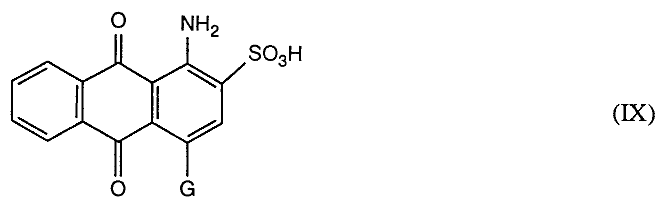
worin R₄ H, Cl oder eine Gruppe -COOCH₃ ist und G eine Gruppe -X₁-X₂-A bedeutet, worin
X₁ -CO- oder eine direkte Bindung, X₂ -O- oder -NH- und A eine Gruppe 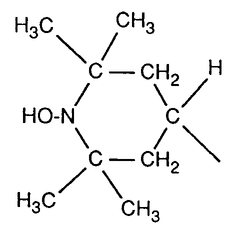
bedeuten.

Die Herstellung der erfindungsgemässen Pigmentsalze erfolgt in Analogie zu an sich bekannten Methoden. Generell erfolgt sie durch Umsetzung einer Komponente, die eine Gruppe E enthält mit einer Komponente, die n Gruppen G enthält, wobei eine der beiden Komponenten den Rest F oder beide Komponenten je eine Vorstufe zu F enthalten. Erfindungsgemässe Azopigmentsalze werden demnach im allgemeinen z.B. durch Kuppeln eines diazotierten Amins mit einer entsprechenden kupplungsfähigen Verbindung, wobei eine der beiden Komponenten die Gruppe E, die andere Komponente die Gruppe(n) G als Substituenten enthalten, hergestellt.

Die erfindungsgemässen Pigmentsalze eignen sich ausgezeichnet als Pigmente zum Färben von hochmolekularem organischem Material, insbesondere wenn hohe Anforderungen an die Licht- und Wetterbeständigkeit gestellt werden.

Hochmolekulare organiche Materialien, die mit den erfindungsgemässen Pigmentsalzen pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die erfindungsgemässen Pigmentsalze zum Einfärben von Kunststoffen, sowie zum Pigmentieren von Lacken, Anstrichstoffen und Druckfarben.

Die erfindungsgemässen Pigmentsalze eignen sich aber vorzugsweise zum Färben von Polyolefinen, wie Polyethylen und Polypropylen, Polyvinylchlorid, Polystyrol, Polyacrylate, Polyesteralkyd- und Polyurethanlacke.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Pigmentsalze als Toner oder in Form von Präparaten einzusetzen.

Bezogen auf das zu pigmentierende hochmolekulare organische Material kann man die erfindungsgemässen Pigmentsalze in einer Menge von 0,01 bis 40 Gew.%, vorzugsweise von 0,1 bis 10 Gew.%, einsetzen.

Die Pigmentierung der hochmolekularen organischen Substanzen mit den erfindungsgemässen Pigmentsalzen erfolgt beispielsweise derart, dass man ein solches Pigmentsalz gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Pigmentsalze in die Polymeren eingearbeitet werden. Zwecks Erzielung verschiedener Farbtöne ist es ferner möglich, den hochmolekularen organischen Stoffen neben den erfindungsgemässen Pigmentsalzen noch Füllstoffe beziehungsweise andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen Pigmentsalze gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert beziehungsweise gelöst. Man kann dabei so verfahren, dass man die einzelnen Komponenten für sich oder auch mehrere gemeinsam dispergiert beziehungsweise löst, und erst hierauf alle Komponenten zusammenbringt.

In Färbungen, beispielsweise von Lacken, Polyvinylchlorid oder Polyolefinen, zeichnen sich die erfindungsgemässen Pigmentsalze durch gute allgemeine Pigmenteigenschaften, wie gute Dispergierbarkeit, hohe Farbstärke und Reinheit, gute Migrations-, Hitze- und insbesondere Licht- und Wetterbeständigkeit aus.

Die nachfolgenden Beispiele erläutern die Erfindung. Darin bedeuten Teile Gewichtsteile, sofern nichts anderes angegeben ist.

### Beispiel 1a): 10 Teile des Amins der Formel

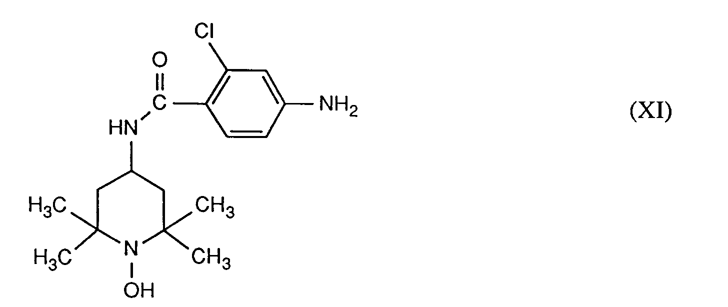

werden 30 Minuten in einer Lösung aus 15 Teilen Eisessig, 15 Teilen Wasser und 10 Teilen Ethanol bei Raumtemperatur gerührt, dann mit 15 Teilen konzentrierter Salzsäure versetzt, weitere 30 Minuten bei Raumtemperatur gerührt, sodann durch Anlegen eines Eis/Wasserbades und Zugabe von 15 Teilen Eis auf 0 bis 5°C abgekühlt und danach innerhalb von 10-20 Minuten unter Rühren mit 4 Volumenteilen 40 %iger wässriger Natriumnitritlösung versetzt und 1 Stunde bei 0 bis 5°C gerührt. Die erhaltene Diazoniumchloridlösung wird schliesslich klarfiltriert.

### b) 8 Teile des Pyrazolons der Formel

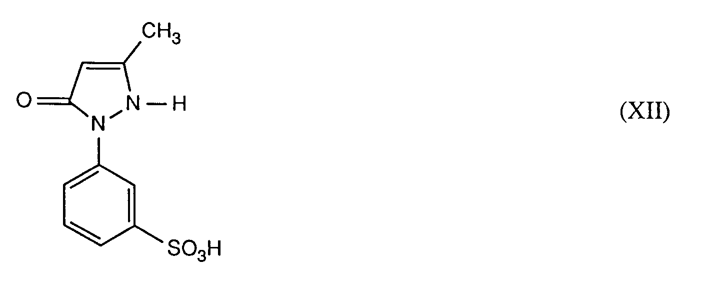

werden in 50 Teilen Wasser und 6 Teilen 30 %iger Natronlauge bei Raumtemperatur gelöst und durch langsames einbringen in eine Lösung aus 30 Teilen Wasser und 6 Teilen Eisessig wieder ausgefällt. Unter Rühren entsteht eine Suspension, die auf 0 bis 5°C abgekühlt und innerhalb von 30 Minuten unter Rühren mit der auf gleicher Temperatur abgekühlten Diazoniumsalzlösung aus a) versetzt wird. Die entstandene gelbe Suspension wird 3 Stunden bei 0 bis 5°C, 1 Stunde bei 20°C und 1 Stunde bei 80 bis 85°C gerührt, dann filtriert. Der Rückstand wird mit Wasser salz- und säurefrei gewaschen, bei 80°C getrocknet und schliesslich gemahlen.

### Beispiel 2: Beispiel 1 wird wiederholt mit der einzigen Ausnahme, dass anstelle des Amins der Formel XI die äquivalente Menge eines Amins der Formel

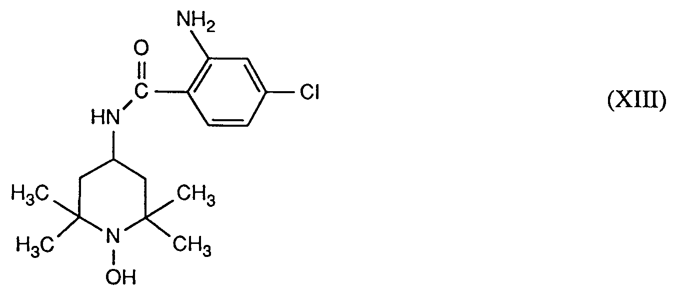

eingesetzt wird.

### Beispiel 3: Beispiel 1 wird wiederholt mit der einzigen Ausnahme, dass anstelle des Amins der Formel XI die äquivalente Menge eines Amins der Formel

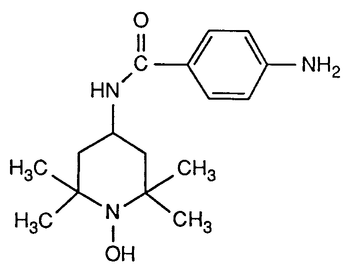

eingesetzt wird.

### Beispiel 4: Beispiel 1 wird wiederholt mit der einzigen Ausnahme, dass anstelle des Amins der Formel XI die äquivalente Menge eines Amins der Formel

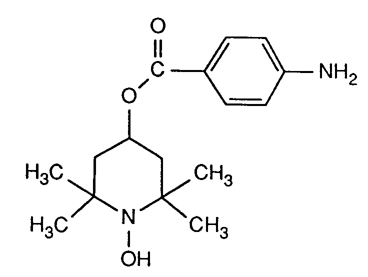

eingesetzt wird.

### Beispiel 5: Beispiel 1 wird wiederholt mit der einzigen Ausnahme, dass anstelle des Amins der Formel XI die äquivalente Menge eines Amins der Formel

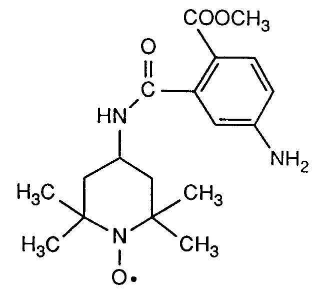

eingesetzt wird.

### Beispiel 6: Beispiel 1 wird wiederholt mit der einzigen Ausnahme, dass anstelle des Amins der Formel XI die äquivalente Menge eines Amins der Formel

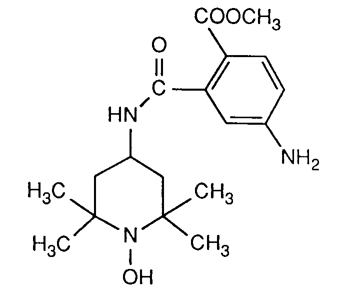

eingesetzt wird.

### Beispiel 7: Beispiel 1 wird wiederholt mit der einzigen Ausnahme, dass anstelle des Amins der Formel XI die äquivalente Menge eines Amins der Formel

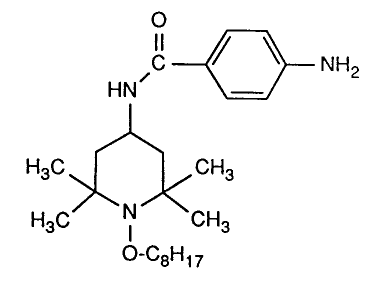

eingesetzt wird.

### Beispiel 8: Das gemäss Beispiel 1 erhaltene Pigmentsalz wird wie folgt in einen Alkyd-Melamin-Einbrennlack eingearbeitet:

0,4 g Pigmentsalz, 7,6 g TiO₂, 9 ml Methylisobutylketon und 30 g Einbrennlack bestehend aus 66,5 Teilen Alkydharz ®ALKYDAL F27 (Bayer AG), 24,4 Teilen Melaminharz ®MAPRENAL TTK (Hoechst AG), 2,1 Teilen Xylol, 4,0 Teilen Ethylenglykol und 1,0 Teil Silikonöl (1 %ig in Xylol) werden nach üblichen Methoden vermischt. Der erhaltene Farblack wird auf Aluminiumblech ausgezogen und 30 Minuten bei 130°C eingebrannt.

Eine Weitere Lackausfärbung wird in der genau gleichen Weise hergestellt, mit der einzigen Ausnahme, dass anstelle des Produktes von Beispiel 1 die gleiche Gewichtsmenge des analogen Pigmentsalzes ohne Nitroxylgruppe der Formel 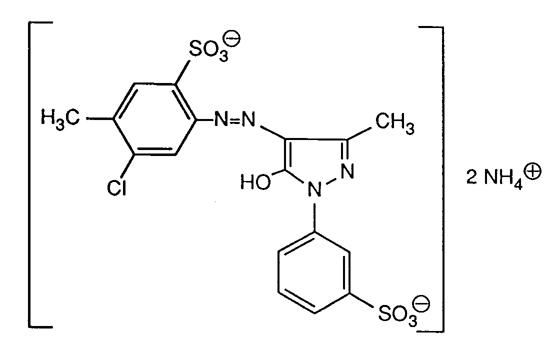
(Beispiel 18 von US Patent 4 992 495),
eingesetzt wird.

Die Wetterbeständigkeit der erhaltenen Lackausfärbungen wird gemäss WOM-Test nach DIN 53387 nach 500 Stunden Bewitterung bestimmt. Bei der mit dem erfindungsgemässen Pigmentsalz erhaltenen Ausfärbung kann eine bessere Wetterbeständigkeit, als bei der Kontroll-Lackausfärbung nachgewiesen werden.

## Patentansprüche

1. Pigmentsalze von Verbindungen der Formel
E-F-(G)ₙ (I),
worin
F den Rest eines Pigments der Monoazo-, Bisazo-, Anthrachinon-, Perinon-, Diketopyrrolopyrrol- oder Isoindolinreihe bedeutet,
E ein Säurerest -COOH, -SO₃H oder 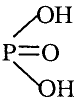 ist,
n 1 oder, wenn E 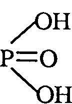 bedeutet, 1 oder 2 ist,
G einen Nitroxylrest der Formel
-X₁-V-X₂-T-A
bedeutet, worin
X₁ und X₂ unabhängig voneinander -O-, -S-, -N(R₁)-, -CO- oder -SO₂- oder eine direkte Bindung.
V ein Gruppe -(CH₂)ₘ-, 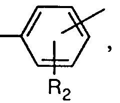 -(CH₂CH₂O)ₘ-CH₂CH₂- oder eine direkte Bindung und m 1 oder 2 bedeuten, wobei, wenn V eine direkte Bindung ist, X₁ ebenfalls eine direkte Bindung oder -CO- und X₂ eine direkte Bindung -O- oder -N(R₁)- bedeuten, T eine Gruppe 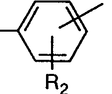 oder -(CH₂)ₘ- ist und, wenn nicht an einem N-Atom gebunden, auch eine direkte Bindung sein kann,
R₁ Wasserstoff oder C₁-C₄-Alkyl und
R₂ Waserstoff, Halogen oder C₁-C₄-Alkyl bedeuten,
A eine Gruppe der Formel 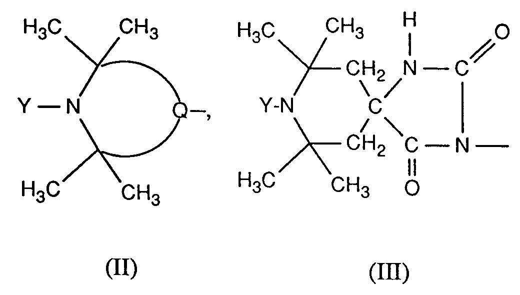 oder 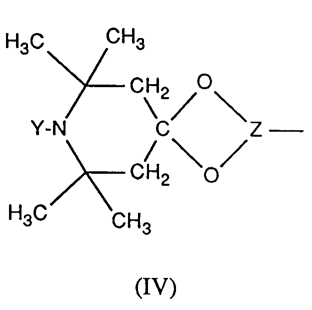 ist, worin
Y O·, OH oder OR₃ ist und R₃ C₄-C₁₀-Alkyl oder C₅-C₆-Cycloalkyl bedeutet, Q eine Gruppe der Formel 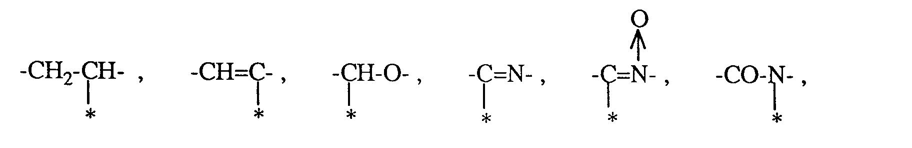 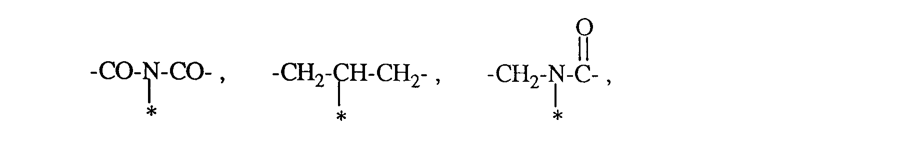 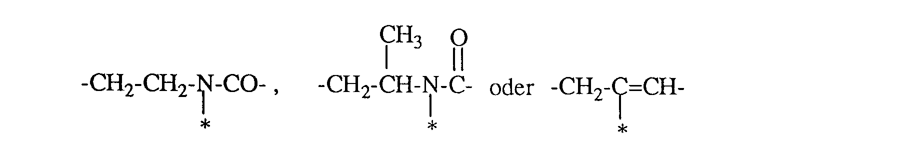 darstellt, worin die mit * bezeichnete Bindung die zu T führende Bindung bedeutet, und
Z eine Gruppe der Formel 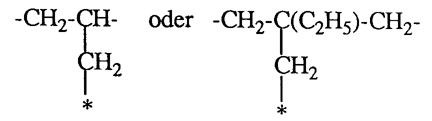 ist, worin die mit * bezeichnete Bindung die zu T führende Bindung darstellt.

2. Pigmentsalze gemäss Anspruch 1, von Verbindungen der Formel I, worin E -SO₃H bedeutet.

3. Pigmentsalze gemäss Anspruch 1, worin G einen Nitroxylrest der Formel
X₁-X₂-T-A
bedeutet, worin
X₁ -CO- oder eine direkte Bindung bedeutet,
X₂ -O- oder -N(R₁)- ist,
T eine Gruppe 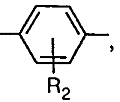 -(CH₂)ₘ- oder eine direkte Bindung bedeutet,
R₁ und R₂ Wasserstoff oder Methyl sind,
A eine Gruppe 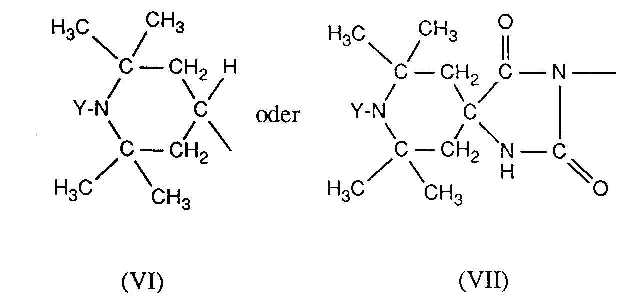 bedeutet, worin
Y OH oder OR₃ ist und R₃ n-Octyl oder Cyclohexyl bedeutet.

4. Pigmentsalze gemäss Anspruch 1, von Verbindungen der Formel 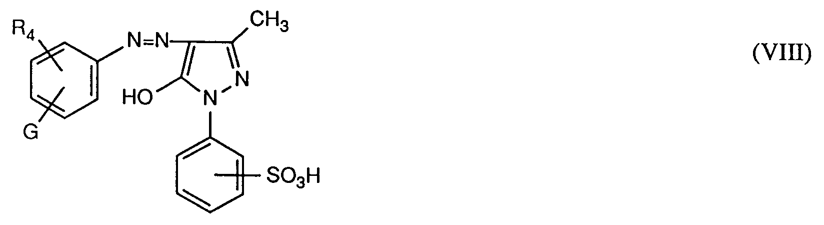 oder der Formel 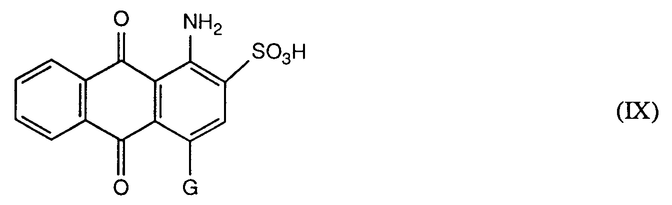 worin R₄ H, Cl oder eine Gruppe -COOCH₃ ist und G eine Gruppe -X₁-X₂-A bedeutet,
worin
X₁ -CO- oder eine direkte Bindung, X₂-O- oder -NH- und A eine Gruppe 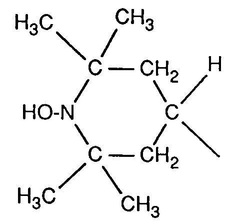 bedeuten.

5. Mit einem Pigmentsalz gemäss Anspruch 1 pigmentiertes hochmolekulares organisches Material.
